# EUROPEAN PATENT APPLICATION

(11) **EP 3 078 312 A1**
(43) Date of publication of application: **12.10.2016**
(21) Application number: 13898852.2
(22) Date of filing: 03.12.2013
(51) Int. Cl.: A47J 36/26, F24C 5/20

(54) **STOVE**

(71) Applicant: Glatt Russek, Carlos, 52786 Huixquilucan (MX)
(72) Inventor: Glatt Russek, Carlos, 52786 Huixquilucan (MX)
(74) Representative: Vogel, Andreas
(86) International application number: PCT/MX2013/000158
(87) International publication number: WO 2015/084137

(57) **Abstract**

A low-cost stove which is essentially conformed by three metallic cans; where the first serves as the support structure and comprises a first plurality of holes along its entire periphery which serve as inlet ports for air and oxygen. The second can, which is integrally attached to the interior of the first can, has the function of serving as an alcohol container and burner. Such second can or burner comprises a second plurality of holes on its lateral wall extending along its entire periphery which are spaced equidistantly from each other, where such second plurality of holes in the second can or burner, are in fluid communication with the first plurality of holes of the first can. The burner also comprises, on its upper wall, a central hole, which serves as inlet for pouring alcohol to its interior. Also, such central hole, when the stove is being used, is covered with a coin so that the combustion gases and flames are oriented towards the second plurality of holes to provide heating to the food or water container, which is placed on the upper ridges of the first and second cans. The third can is simple and without holes, it has the function of extinguishing the fire and can be used as an advertising space.

## Description

### INVENTION'S FIELD

The present invention refers to a low-cost stove that can be used in disaster areas, camping areas or areas of extreme poverty where the technology and services that are normally present in middle and high class homes are not present; namely for cooking and preparing food, such as LP gas service, electric grills or microwave ovens. In particular, the present invention refers to a stove with high thermal efficiency using a simple and common fuel such as ethanol at 99.5%, 96% or 70%, which is available at a very low-cost in any store, pharmacy, mall, etc. Likewise, the present invention refers to a stove that requires simple, economic and ecological manufacturing, as it is essentially conformed by only three simple cans.

### INVENTION'S BACKGROUND

At present, there are several means to cook and prepare food such as gas stoves, electric grills, microwave or electric ovens. Also, it is known that in camping areas or areas in extreme poverty food preparation is carried out building fires, using wood or paper as fuel.

However, all the aforementioned means present several problems; for example when a person has to prepare food in disaster areas, since it is well known that after a disaster such as an earthquake, hurricane, tsunami, etc., the affected areas have no services, such as gas or electricity, rendering the preparation of food or boiling water in these affected areas as too complicated; and given that those affected areas commonly remain without means of communication, such as roads, to deliver stoves and their respective fuel, such as LP gas, for cooking and much less electricity to use electric grills. Also, supplying such stoves and gas by air is too dangerous due to the fact that the containers of kind of fuels, which are submitted to high pressures, are made of metal and are very heavy as well as delicate to transport, since in case that the container is hit because of turbulence (due to weather conditions), it could explode, causing even more damage.

Also, for areas in extreme poverty, food preparation is extremely complicated by the aforementioned means, since usually this kind of areas do not comprise any service such as potable water, electricity, drainage and much less gas. Likewise, for people who inhabit these kinds of areas, it is almost impossible to acquire a common stove since they are very expensive and the fuel to make them work is also very expensive. Because of this, in such areas the food is commonly cooked or prepared burning wood or charcoal, which is highly polluting and harmful to the person's health when done indoors.

Also, there are burners that use solid alcohol as fuel to issue a flame; however, these kind of burners are not suitable for preparing food, since they do not reach a temperature high enough for cooking food or boil water, thus, these kind of devices are known as "warmers" or "heaters" since they only keep food at a constant temperature, which is very low, to avoid it getting cold, but they are not intended for cooking.

### INVENTION'S PURPOSE

Therefore, one purpose of this invention is to provide a low-cost stove, to be used in disaster areas, where both the stove and the fuel required are easy to transport.

Another purpose of the invention is to provide a low-cost stove of simple, economic and ecological manufacturing that has a long useful life.

Still, another purpose of the present invention is to provide a low-cost stove with high thermal efficiency using a simple and common fuel, such as ethanol or alcohol at 70%, 96% or even 99.5%.

Another purpose of the invention is to provide a low-cost stove, making such stove and its fuel fully accessible to people living in areas of extreme poverty.

An additional purpose of the invention is to provide a low-cost stove that reaches temperatures ranging between 310 and 350 °C (590-662 °F), in a first version, in order to cook any type of food; and in a second version, where the first can is also used as a burner, the stove reaches temperatures ranging between 350 and 400 °C (662-752 °F).

Another purpose of the present invention is to provide a low-cost stove, which can be used on any surface without requiring any insulating protection as the stove's base is not heated.

Yet another purpose of the invention to is to provide a low-cost stove, fully functional in several scales, which can be manufactured in different sizes or dimensions according to different needs, without losing efficiency.

### BRIEF DESCRIPTION OF THE INVENTION

These and other purposes are achieved by a low-cost stove which is essentially conformed by three metallic cans; from which the first can, that is opened at the top and serves as the support structure, comprises a first plurality of holes along its entire periphery, which serve as inlet ports for air and oxygen. The second can, which is integrally attached by any suitable mean to the interior of the first can, has the function of fuel container and burner. Such second can or burner comprises a second plurality of holes on its lateral wall extending along its entire periphery, spaced equidistantly from each other; this second plurality of holes in the second can or burner have fluid communication with the first plurality of holes in the first can. The burner further comprises, on its upper wall, a central hole which has the function inlet so the fuel can be poured to its interior. Also, such central hole, when the stove is being used, must be covered by a coin to cause that the combustion gases and flame are deviated towards the second plurality of holes in order to heat the container of food or water, which must be placed on the upper edges of the first and second cans.

The third can is simple and without holes and has the function of extinguishing the fire by covering the burner and abruptly cutting off the oxygen supply from the first plurality of holes; also, the third can or cover has the additional function of maintaining the ethanol or alcohol inside the tank/burner for long periods of time, and it can be used as an advertising space.

In an additional version, the first can or stove structure serves as a second burner; in order to do this, fuel is introduced into the interior cavity formed between the first and second cans, which is ignited after igniting the fuel of the first burner and covering the upper central hole of the first burner.

This additional version of the low-cost stove regarding the present invention further comprises a fourth can; which, like the third can, is simple and without perforations and has the function of extinguishing the fire of the second burner, covering it and abruptly cutting off the oxygen supply from the environment that is introduced into the cavity through the first plurality of holes. Also, this fourth can or cover has the additional function of maintaining the ethanol or alcohol within the cavity for long periods of time, and it can also be used as an advertising space.

The additional features and advantages of the invention should be more clearly understood through the detailed description of the preferred version thereof, given by a non-limitative example with references to the attached drawings, in which:

### BRIEF DESCRIPTION OF THE DRAWINGS

Figure 1 is a perspective view of the low-cost stove that shows the first and second cans before being used.
Figure 1A is a perspective view of the low-cost stove that shows the third can covering the second can to extinguish the stove after being used.
Figure 1 B is a transversal cross section of the low-cost stove regarding the present invention showing all the assembled components.
Figure 2A is a front view of the first can or stove structure that shows the inlet holes configuration for air and oxygen supply.
Figure 2B is a cross section according to line A-A of Figure 2A that shows the configuration of the elements that form the first can.
Figure 3A is a front view of the second can or burner that shows the holes configuration for air and oxygen supply and flame outlet.
Figure 3B is a cross section according to line A-A of Figure 3A that shows the configuration of the elements that form the second can.
Figure 4A is a front view of the third can or cover.
Figure 4B is a cross section according to line B-B of Figure 4A that shows the configuration of the elements that form the third can.
Figure 5A is a perspective view of the low-cost stove regarding the present invention being used, in which the upper central hole is covered with a coin.
Figure 5B is a transversal cross section of Figure 4A that shows the fluid communication between the holes of the first can and the holes of the second can.
Figure 6A is a perspective view of a second version of the low-cost stove regarding the present invention after being uses that shows a fourth can completely covering the first can and/or stove.
Figure 6B is a transversal cross section of Figure 6A that shows the third and fourth cans covering the first and second cans, respectively.
Figure 7 is a diagram that shows the combustion and flames behavior of the low-cost stove regarding the present invention.

### DETAILED DESCRIPTION OF THE INVENTION

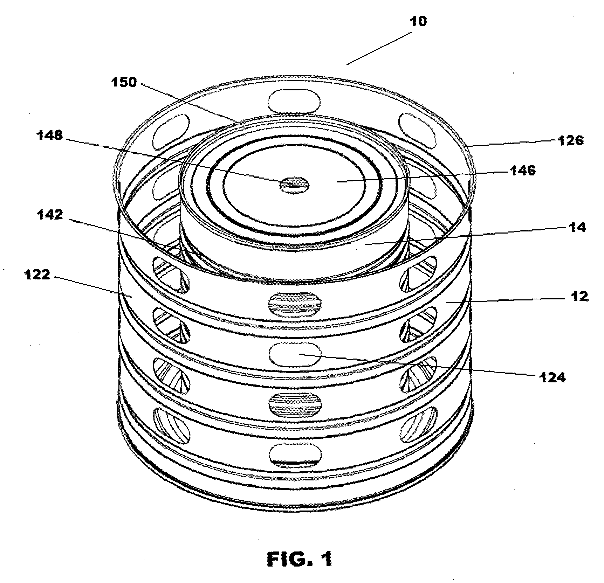

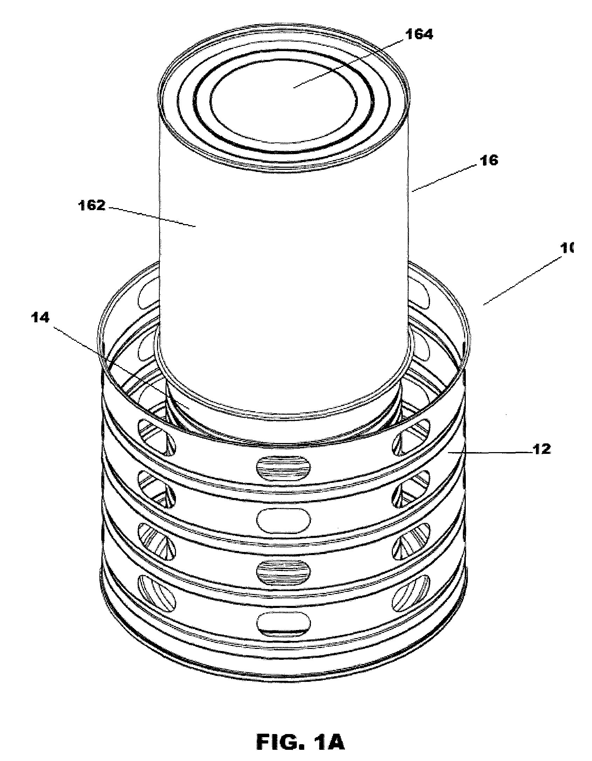

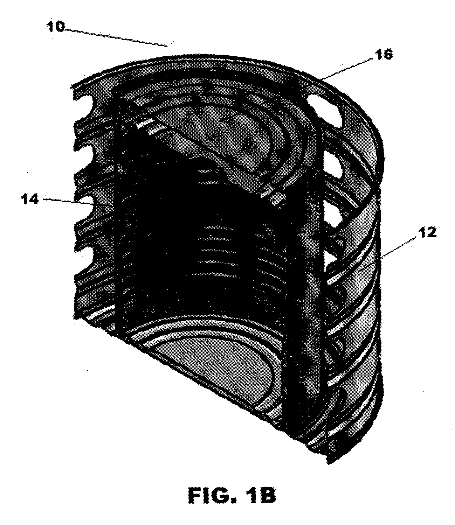

Referencing Figures 1 to 6B, the low-cost stove regarding the present invention is generally shown numbered as 10. The stove is generally conformed by a first can or stove structure 12, a second can or burner 14, and a third can or cover 16. Also, in a further version, such low-cost stove comprises a fourth can or cover 22.

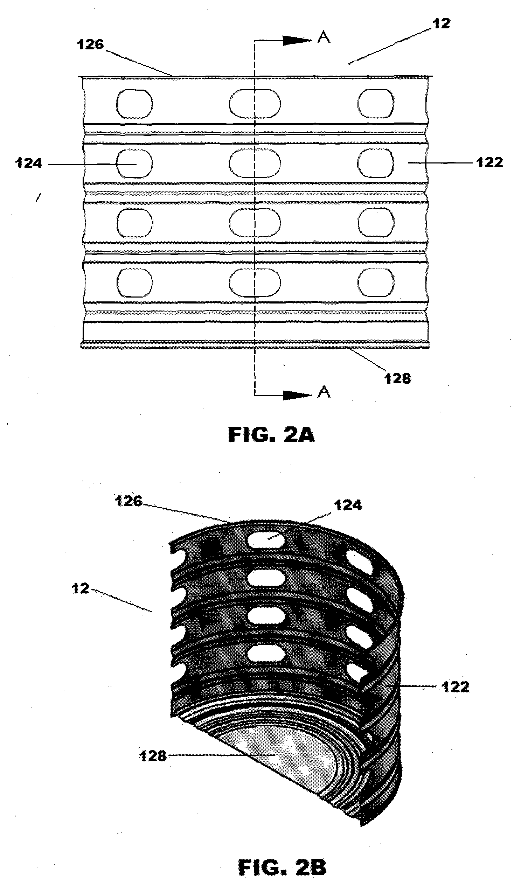

Referencing now Figures 2A and 2B, they show the first can 12, which has a substantially cylindrical shape; such can 12 comprises a sidewall 122 which is integrally attached to a base wall 128 forming an open can on its upper end. The sidewall 122 comprises a first plurality of holes 124 that have a substantially oblong configuration, which, as their main function, allow air and oxygen into the first can, such plurality of holes is disposed along the entire periphery such sidewall 122, forming holes columns 124 equidistantly spaced from each other. Such sidewall also has a rounded ridge 126 at its upper end to avoid the user cutting his/her hand when handling of the stove, and which serves as a reinforcement for supporting the container in which the food will be prepared.

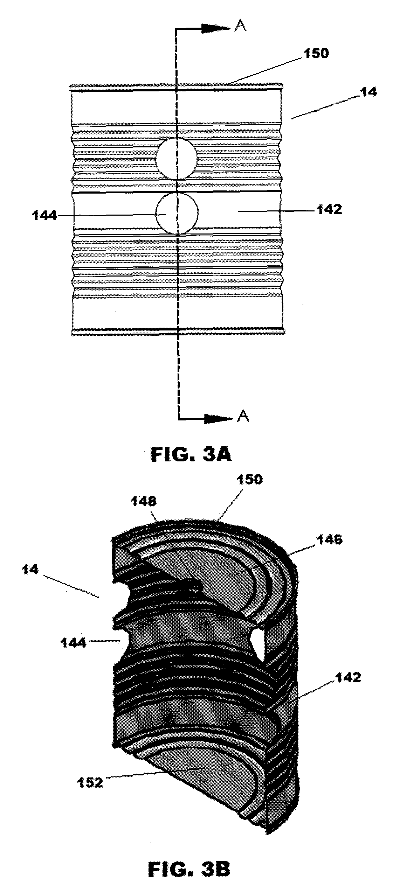

Referencing Figures 3A and 3B, they show the second can or burner 14 of the low-cost stove 10 regarding the present invention, which is disposed within such first can; this burner 14 comprises a sidewall 142, which is integrally attached to an upper wall 146 and a base wall 152, forming a closed can. The sidewall 142 has a second plurality of holes 144 with a substantially circular configuration, which, as their main function, allow air and oxygen into the burner and, as their second function, serve as outlet for the combustion gases and flames in order to heat the container in which the food will be prepared.

Such second plurality of holes 144 is formed by pairs of holes vertically disposed, one upper and one lower, which are arranged along the entire periphery of such sidewall 142 and spaced equidistantly from one another. Such pairs of holes 144 are placed so that the center of the diameter of the lower holes 144 coincides with the center of the can or burner 14 so that there is enough space between the lower hole of each pair of holes 144 and the wall base 152 to contain the alcohol needed for cooking food. The upper wall 146 is slightly conical to serve as a funnel when supplying fuel into the burner. Such upper wall 146 also comprises a central hole 148 which allows alcohol to enter such burner, and a reinforcing ridge 150 which serves to support the container in which the food will be prepared, along with the ridge 126 of the first can 12. The base wall 152 serves as a connection between the first can 12 and the second can or burner 14, as the outer surface of such base wall 152 is fixedly or permanently attached to the inner surface of the base wall 128 of the first can.

Such first and second cans can be joined by any suitable means, such as welding, punching, or adhesives, without diverting from the invention scope.

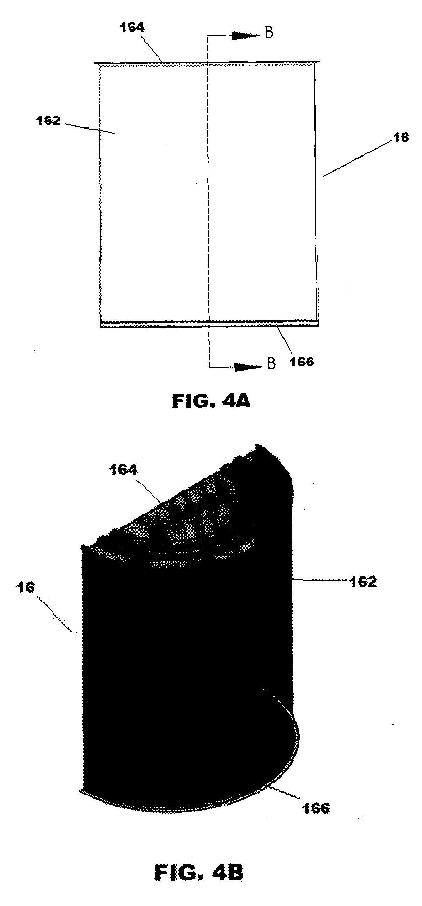

Referencing now Figures 4A and 4B, such figures show the third can or cover 16, which comprises a sidewall 162 and a wall integrally attached to an upper wall 164, such third can or cover 16 has the function of putting the stove 10 out once the food has been cooked, by covering the second can or burner 14 and suddenly cutting off the air and oxygen supply into such burner.

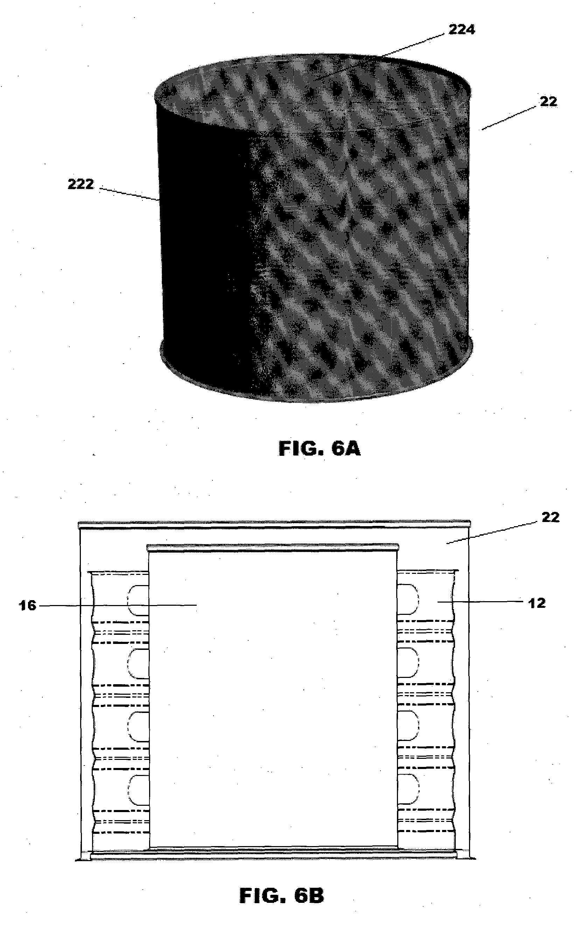

In a second version shown in Figures 6A and 6B, the first can also has the function of second burner, for which an inner cavity or second combustion chamber 20, located between the sidewall 122 of the first can and the sidewall 142 of the second can or first burner, is filled with alcohol for combustion, in such second version, the first plurality of holes have a second function: outlet for the combustion gases and flames to provide heat and additional fire to the container in which the food will be prepared.

In the second version of the present invention, shown in such figures 6A and 6B, the low-cost stove also comprises a fourth can or cover 22, which is similar in design to the third can 16, but with dimensions such that it completely covers the first can, extinguishing the fire of the second burner 12.

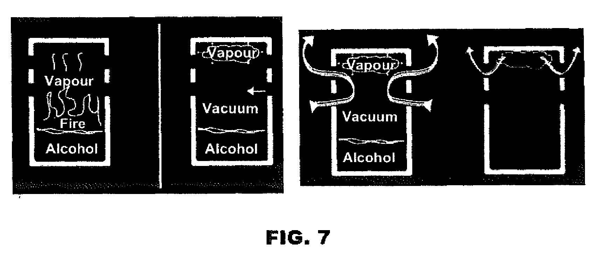

The operation of the first version of the low-cost stove regarding the present invention is as follows:
Referencing Figures 1 and 7, in a first stage, the third can 16 is removed from the stove, leaving the burner 14 free; then, such burner 14 is filled with alcohol at 99.5% or 96% or 70%, which is introduced through the upper central hole 148, once the alcohol is located within the burner 14, the gases expelled by the alcohol are ignited using any suitable ignition means such as a match or lighter, thereby generating a yellow or orange flame.

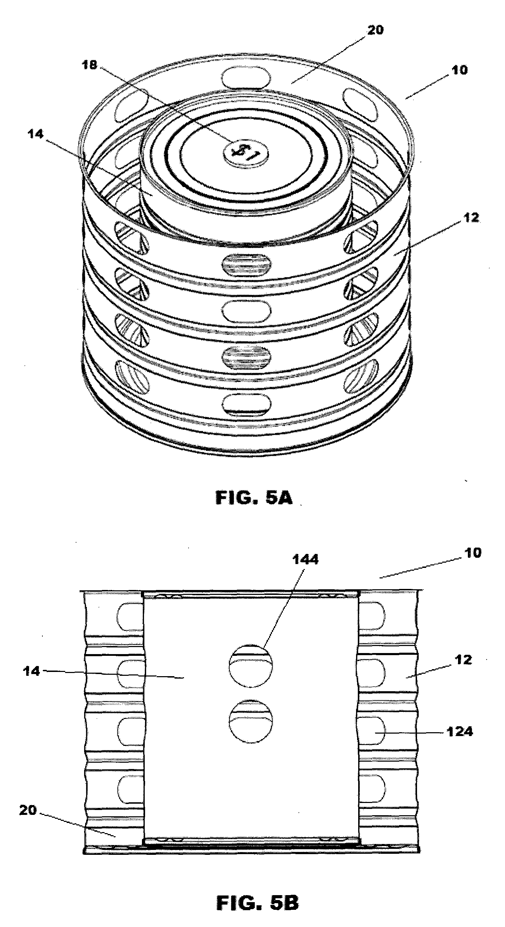

After initiating the alcohol combustion, such hole 148 is covered using the coin 18, as shown in Figure 5A, which generates a combustion change, and causes the combustion gases and flames to be fully oriented towards the holes 144 making the flame change to blue, which indicates that the flames temperature is at its more optimum point, as shown in Figure 7.

Once such blue flames are reached, the food or water container is placed over the stove so it gets heated and the food prepared, the cooking surface reaches temperatures ranging from 300-350 °C (572-662 °F).

When the food has been prepared or water has been boiled, the stove 10 is put out by placing the cover 16 over the burner 14, as shown in Figures 1A and 1B, which suddenly cuts off the oxygen feeding into the burner 14, immediately extinguishing the flames.

The operation of the second version of the low-cost stove regarding the present invention is as follows:
Referencing Figure 1 and 6B, in a first stage, the third and fourth cans 16 are removed from the stove, leaving the first burner 14 and second burner 12 free; then, such first burner 14 and second burner 12 are filled with alcohol at 99.5% or 96% or 70%, which is introduced into the first combustion chamber through the upper central hole 148, and in the second combustion chamber through the upper part thereof; once the alcohol is located within the first and second combustion chambers 14 and 12, the alcohol gases expelled from both the first combustion chamber and the second combustion chamber are ignited simultaneously using any suitable ignition means, such as a match or lighter, thereby generating first and second yellow or orange flames.

After initiating the alcohol combustion in the first and second burners 14 and 12, such hole 148 is covered by the coin 18, which generates a combustion change causing that the combustion gases and flames be fully oriented towards the holes 144, as shown in Figure 7, causing that both the flame of the first burner 14, as the flame of the second burner 12 change into a blue color, which indicates that the flames temperature is at its more optimum point.

Once such blue flames are reached, the food or water container is placed over the stove so it gets heated and the food prepared.

When the food has been prepared or water has been boiled, the stove 10 is put out by placing the cover 16 over the burner 14 and placing the cover 22 over the second burner 12, which suddenly cuts off the oxygen feeding into the first and second burners 14, immediately extinguishing the flames.

The structural configuration of the cans and holes of the low-cost stove regarding the present invention, makes is possible to use the stove on any surface, as the base never heats up, due to the fact that the high temperatures are concentrated only in the upper part of the stove.

Also, given the arrangement and disposition of the first and second plurality of orifices, it is possible to reach temperatures from 350 °C up to 400 °C (662-752 °F), due to the high oxygenation in the combustion chambers of the first and second burners.

Moreover, the low-cost stove regarding the present invention has high efficiency and performance regarding the relationship between temperature and fuel, which is indicated in the following tables and examples, as well as a comparison between the existing conventional stoves and low-cost stove regarding the present invention:
Tank one uses 330 ml of ethanol at 96°.
Tank two uses 550 ml of ethanol at 96°.
The stove is manufactured from nickel-plated metal sheet.

### RESULTS:

### 1. Using Ethanol at 96%. Tank 1

| | | |
|---|---|---|
| Boiling Time (2.8 L of water) | 37 | minutes |
| Consumed ethanol | 130.0 | grams |
| Thermal efficiency | 39% | |
| *Firepower* | 1,417.0 | watts |

Thus, 48 g of ethanol are required to boil 1 L of water.

### 2. Using Ethanol at 96%. Tank 2

| | | |
|---|---|---|
| Boiling Time (2.8 L of water) | 11 | minutes |
| Consumed ethanol | 255.0 | grams |
| Thermal efficiency | 16% | |
| *Firepower* | 9,350.0 | watts |

Thus, 89 g of ethanol are required to boil 1 L of water.

### 3. Emissions *

1.2 g CO/kg ethanol.
2.8 g PM/kg ethanol.
* Measured using Tank 2.

| Time | **Initial** | **.5 minute** | **1 minute** | **1.5 minutes** | **2 minutes** | **2.5 minutes** | **3 minutes** |
|---|---|---|---|---|---|---|---|
| **Product** | | | | | | | |
| Glatt Stove tank #1 | 21 | 125 | 180 | 230 | 270 | 300 | 315 |
| Glatt Stove tank #1 + tank #2 | 21 | 170 | 250 | 320 | 340 | 370 | 390 |
| Homemade gas stove with 6 burners | 21 | 160 | 250 | 315 | 337 | 340 | 343 |
| Can with solid alcohol | 21 | 110 | 120 | 140 | 140 | 155 | 155 |
| Pressure Gas Grill | 21 | 110 | 260 | 315 | 350 | 370 | 375 |
| Gas Grill with an External Tank 30 Kg. | 21 | 140 | 230 | 290 | 310 | 315 | 330 |
| Electrical Grill | 21 | 110 | 200 | 220 | 300 | 310 | 310 |
| Campfire made with three stones | 21 | NA | NA | NA | NA | NA | NA |
| Brazier | 21 | NA | NA | NA | NA | NA | NA |

Data is in Celsius Degrees.

The test was performed using a tortilla griddle made of thin metal sheet with a diameter of 30 cm.

NA means "Not Applicable" since turning on any of these products or systems takes more than 3 minutes.

The temperatures are stated in average since due the griddle is heated unevenly because of its thickness.

## Claims

1. A low-cost stove that can be used in disaster areas or areas of extreme poverty, which is activated by liquid alcohol and comprises:
a first can that serves as supporting structure, which comprises a sidewall, a base wall integrally attached to such sidewall, and a reinforcing ridge at the upper end of such sidewall which serves as direct support for the container I which the food will be prepared;
a second can or burner placed within such first can, comprising a sidewall integrally attached to an upper wall and a base wall, forming a combustion chamber within such second can or burner, where such burner is fixedly or permanently attached through such base wall to the base wall of the first can forming a single element; and
a third can or cover that has the function of putting out the stove when placed over such burner, such cover comprising a sidewall integrally attached to an upper wall; such stove is **characterized in that**:
the sidewall of the first can comprises a first plurality of holes that serve as inlet holes for air and oxygen supply into the first can;
where the burner comprises, on its sidewall, a second plurality of holes being in fluid communication with the first plurality of holes on the first can, such second plurality of holes serve as inlet holes for air and oxygen supply into the combustion chamber and have the secondary function of serving as outlet means for combustion gases and flames to provide heat to the container in which the food will be prepared; such burner further comprises a central hole in the upper wall, which allows alcohol to be poured into such combustion chamber, and a reinforcing ridge serving as a second support for the container in which the food will be prepared;
where, once the alcohol combustion has started, the central hole is covered with a coin, causing the combustion gases and flames to be completely oriented towards the second plurality of holes providing a blue flame, indicating that the flame temperature is at its more optimal point;
and where once the food preparation is done, the stove is put out by placing the third can or cap over the burner, which suddenly cuts off the oxygen feeding into the combustion chamber, immediately extinguishing the flames.

2. The stove, according to claim 1, is also **characterized in that** such first plurality of holes is disposed along the entire periphery of the sidewall of the first can, forming columns of holes equidistantly spaced from each other.

3. The stove, according to claim 2, is also **characterized in that** such first plurality of orifices has a substantially oblong configuration.

4. The stove, according to claim 1, is also **characterized in that** such second plurality of holes is formed by pairs of holes vertically arranged one upper and one lower, which are disposed along the entire periphery of such sidewall and spaced equidistantly from one another.

5. The stove, according to claim 4, is also **characterized in that** such second plurality of holes has a substantially circular configuration.

6. The stove, according to claim 5, is also **characterized in that** such pairs of holes are placed so that the center of the diameter of the lower holes coincides with the center of the second can or burner so that there is enough space between the lower hole of each pair of holes and the base wall to contain alcohol to cook food.

7. The stove, according to claim 1, is also **characterized in that** the upper wall is slightly conical to serve as a funnel when supplying fuel into the burner.

8. The stove, according to any of the preceding claims, is also **characterized in that** the alcohol has a percentage of 99.5% or 90% or 70%.

9. The stove, according to any of the preceding claims, is also **characterized in that** due to the structural configuration of the cans and holes in the stove, it can be used on any surface, since its base never heats up as the high temperatures are concentrated only in the upper part of the stove.

10. A method for preparing food in disaster areas or areas of extreme poverty, **characterized by** the steps of:
providing an stove according to any claim from 1 to 6;
supplying a sufficient amount of alcohol at 99.5% or 90% or 70% into the burner's combustion chamber, through the central hole;
igniting the gases expelled by the alcohol contained in the combustion chamber using an ignition means, thereby generating a yellow or orange flame;
covering the central hole with a coin to generate a combustion change causing that the combustion gases and flames are fully oriented towards the second plurality of holes located in the sidewall of the burner, causing the flames to turn blue, which indicates that the flame temperature is at its more optimum point;
placing the food container on the first and second support ridges so it gets heated and the food may be prepared;
putting out the stove once the food preparation is done by placing the third can or cover over the burner suddenly cutting off the oxygen supply to the combustion chamber, immediately extinguishing the flames.

11. The method, according to claim 10, is also **characterized in that** the ignition means is any suitable ignition mean such as a match or lighter.

12. The method, according to claim 10, is also **characterized in that** it is possible to reach temperatures of 300 °C to 350 °C (572-662 °F), due to the high oxygenation of the burner's combustion chamber.

13. A low-cost stove that can be used in disaster areas or areas of extreme poverty, activated by liquid alcohol, comprising:
a first can that serves as supporting structure, which comprises a sidewall, a base wall integrally attached to such sidewall, and a reinforcing ridge at the upper end of such sidewall which serves as direct support for the container I which the food will be prepared;
a second can or first burner placed within such first can, comprising a sidewall integrally attached to an upper wall and a base wall, forming a combustion chamber within such second can or first burner, where such first burner is fixedly or permanently attached through such base wall to the base wall of the first can forming a single element; and
a third can or cover that has the function of putting out the stove when placed over such burner; such cover comprises a sidewall integrally attached to an upper wall; such stove is **characterized in that**:
the first can has the additional function of serving as a second burner when pouring alcohol into a cavity or second combustion chamber formed between the first and second cans, for its combustion, where the sidewall of the first can comprises a first plurality of holes that have the main function of being an inlet for air and oxygen into the second combustion chamber and the second function of serving as outlet for the combustion gases and flames to provide additional heat and fire to the container in which the food will be prepared;
wherein the first burner comprises on the sidewall, a second plurality of holes being in fluid communication with the first plurality of holes on the first can, such second plurality of openings has a first function of serving as inlet means of air and oxygen into the first combustion chamber and a second function of serving as outlet means of combustion gases and flames to provide heat to the container in which the food will be prepared; such first burner further comprises a central hole in the upper wall, which allows the alcohol entry into such first combustion chamber, and a reinforcing ridge serving as second support for the container in which the food will be prepared;
where the stove further comprises a fourth can or cover that puts out the second burner when placed over it, such cover comprises a sidewall integrally attached to an upper wall;
and where, once the alcohol combustion has started in the first and second combustion chambers, the central hole is covered with a coin, causing the combustion gases and flames of the first burner to be completely oriented towards the second plurality of holes providing a blue flames on the first and second burners, indicating that the flame temperature is at its more optimal point;
and where, once the food preparation is done, the stove is put out by placing the third and fourth cans over the first and second burners, respectively, which suddenly cuts off the oxygen feeding into the first and second combustion chambers, immediately extinguishing the flames.

14. The stove, according to claim 13, is also **characterized in that** such first plurality of holes is disposed along the entire periphery of the sidewall of the first can, forming columns of holes equidistantly spaced from each other.

15. The stove, according to claim 14, is also **characterized in that** such first plurality of orifices has a substantially oblong configuration.

16. The stove, according to claim 13, is also **characterized in that** such second plurality of holes is formed by pairs of holes vertically arranged one upper and one lower, which are disposed along the entire periphery of such sidewall and spaced equidistantly from one another.

17. The stove, according to claim 16, is also **characterized in that** such second plurality of holes has a substantially circular configuration.

18. The stove, according to claim 17, is also **characterized in that** such pairs of holes are placed so that the center of the diameter of the lower holes coincides with the center of the second can or burner so that there is enough space between the lower hole of each pair of holes and the base wall to contain alcohol to cook food.

19. The stove, according to claim 13, is also **characterized in that** the upper wall is slightly conical to serve as a funnel when supplying fuel into the burner.

20. The stove, according to any of the preceding claims, is also **characterized in that** the alcohol has a percentage of 99.5% or 90% or 70%.

21. The stove, according to any of the preceding claims, is also **characterized in that** due to the structural configuration of the cans and holes in the stove, it can be used on any surface, since its base never heats up as the high temperatures are concentrated only in the upper part of the stove.

22. A method for preparing food in disaster areas or areas of extreme poverty, **characterized by** the steps of:
providing a stove according to any of claim from 13 to 21;
supplying a sufficient amount of alcohol at 99.5% or 90% or 70% into the burner's combustion chamber, through the central hole;
supplying a sufficient amount of alcohol at 99.5% or 90% or 70% into the second combustion chamber of the second burner, through the upper end of such second combustion chamber;
igniting the gases expelled by the alcohol contained in the combustion chamber using an ignition means, thereby generating a yellow or orange flame;
covering the central hole with a coin to generate a combustion change causing the combustion gases and flames to be fully oriented towards the second plurality of holes located in the sidewall of the burner, causing the flames of the first and second of burners to turn blue, which indicates that the flame temperature is at its more optimum point;
placing the food container on the first and second support ridges so it gets heated and the food may be prepared;
putting out the stove once the food preparation is done by placing the third and fourth cans over the first and second burners, respectively, suddenly cutting off the oxygen supply to the first and second combustion chambers, immediately extinguishing the flames.

23. The method, according to claim 22, is also **characterized in that** the ignition means is any suitable ignition mean such as a match or lighter.

24. The method, according to claim 22, is also **characterized in that** it is possible to reach temperatures of 350 °C to 400 °C (662-752 °F), due to the high oxygenation of the first and second combustion chambers of the first and second burners.

25. The stove, according to any claim from 2 to 9, is also **characterized in that** the outside of the third can be used as advertising space.

26. The stove, according to any claim from 14 to 21, is also **characterized in that** the outside of the third and fourth cans can be used as advertising space.
